# EUROPÄISCHE PATENTSCHRIFT

(11) **EP 3 797 025 B1**
(45) Veröffentlichungstag und Bekanntmachung des Hinweises auf die Patenterteilung: **04.10.2023**
(21) Anmeldenummer: 19725990.6
(22) Anmeldetag: 22.05.2019
(51) Int. Cl.: B29C 48/275, B29C 48/355, B02C 18/14, B29C 48/92, B29B 17/04, B29C 48/08, B29C 48/10, B29B 9/04

(54) **VERFAHREN UND SYSTEM ZUM ABSAUGEN UND ZUM ZERKLEINERN WENIGSTENS EINES STREIFENS**
METHOD AND SYSTEM FOR SUCTIONING AND SIZE-REDUCING AT LEAST ONE STRIP
PROCÉDÉ ET SYSTÈME D'ASPIRATION ET DE DÉCHIQUETAGE D'AU MOINS UN RUBAN

(30) Priorität: 23.05.2018 DE 102018208113
(43) Veröffentlichungstag der Anmeldung: 31.03.2021
(73) Patentinhaber: Windmöller & Hölscher KG, 49525 Lengerich (DE)
(72) Erfinder: MEYER, Ulrich, 49525 Lengerich (DE); HASELMANN, Simon, 49525 Lengerich (DE)
(86) Internationale Anmeldenummer: PCT/EP2019/063241
(87) Internationale Veröffentlichungsnummer: WO 2019/224261

(56) Entgegenhaltungen:
- CN-B- 104 191 543
- CN-U- 204 222 020
- DE-A1- 2 308 698
- DE-U1- 29 907 834
- JP-A- 2007 275 852

## Beschreibung

Die Erfindung betrifft ein Verfahren und ein System zum Absaugen und zum Zerkleinern wenigstens eines Streifens.

An vielen Vorrichtungen zur Herstellung von Folienbahnen, insbesondere an solchen Vorrichtungen, die eine Gießwalzen-Extrusionsanlage darstellen, fallen Streifen an, die durch Längsschnitt der Folienbahn entstehen. Die Folienbahn ist dabei insbesondere eine Kunststofffolienbahn. Solche Streifen sind vor allem Randstreifen, die prozessbedingt Ausschuss darstellen. Derartige Streifen werden zum einfacheren Sammeln oder gar zur Rückspeisung in einen Extruder innerhalb eines Zerkleinerers zu kleinen Flocken, oft auch Fluff genannt, zerkleinert und wieder dem Extruder oder auch einem Abfallbeutel zugeführt. Um den zumindest einen Streifen von der Folienbahn bzw. - genauer gesagt - von der Trenneinrichtung, mit welcher der Streifen von der Folienbahn abgetrennt wird, abführen zu können, ist eine Förderleitung vorgesehen. Die Förderleitung führt den Streifen zum Zerkleinerer. Um das Ansaugen des Streifens zu gewährleisten, ist eine Einrichtung zum Bereitstellen eines Volumenstroms notwendig, die in der Regel den Streifen stromabwärts des Zerkleinerers ansaugt. Dabei ist oft ein sehr hoher Volumenstrom notwendig, um den Streifen mit hoher Prozesssicherheit von der Folienbahn abzuführen. Zum Abführen der in dem Zerkleinerer entstandenen Flocken ist ein hoher Volumenstrom jedoch unerwünscht, da die Gefahr groß ist, dass Staub aus dem System austritt und in die Umgebung abgegeben wird. Staub verschmutzt dabei nicht nur die nähere Umgebung, sondern kann auch gesundheitsschädlich für das Bedienungspersonal sein. Daher sind in solchen Systemen oft ein Luftabscheider und ein Filter vorgesehen, mit welchen ein Großteil der Luft aus dem Prozess entfernt wird, ohne Fluff mitzunehmen. Ein Filter muss jedoch häufig gereinigt oder ersetzt werden, so dass ein solches System sehr wartungsintensiv ist.

Anstelle einer Saugeinrichtung kann auch eine Druckeinrichtung vorgesehen sein, die stromaufwärts des Zerkleinerers angeordnet ist und den Streifen sozusagen in den Zerkleinerer drückt. Dadurch herrscht in dem System ein Überdruck, welcher wiederum dazu führen kann, dass Staub austritt.

Die Druckschrift CN 104 191 543 B zeigt ein System, bei der stromabwärts des Zerkleinerers eine Saugeinrichtung vorgesehen ist. Oberhalb des Zerkleinerers ist ein Topf mit einem luftdurchlässigen Führungskanal gezeigt. Der Topf ist mit der Saugseite einer weiteren Saugeinrichtung verbunden, wobei die Druckseite der Saugeinrichtung oberhalb des Topfes mit der Zuführleitung zu dem Topf verbunden ist.

Die Druckschrift DE 299 07 834 U1 zeigt einen Zerkleinerer, dem eine Ejektordüse vorgeordnet ist, so dass ein Streifen über den Venturieffekt angesaugt wird. Dennoch wird der Streifen in den Zerkleinerer gedrückt.

Die Druckschrift DE 23 08 698 A1 zeigt eine Einrichtung, bei dem ein Streifen mit einem Gebläse in einen Zerkleinerer gedrückt wird.

Die JP 2007 275852 A zeigt hingegen ein System, bei dem eine Saugeinrichtung stromabwärts des Zerkleinerers vorgesehen ist.

Die CN 204 222 020 U offenbart eine Vorrichtung, bei der - ähnlich wie in der CN 104 191 543 - ein Topf mit einer angeschlossenen Saugeinheit vorgesehen ist. Mit dieser Saugeinheit wird jedoch auch Luft in die Leitung zwischen dem Topf und dem Zerkleinerer gedrückt. Zusätzlich ist eine Saugeinrichtung stromabwärts des Zerkleinerers vorgesehen.

Die Aufgabe der vorliegenden Erfindung ist es daher, ein System und ein Verfahren zum Absaugen und zum Zerkleinern wenigstens eines Streifens vorzuschlagen, bei dem die austretende Staubmenge reduziert oder gar ganz eliminiert ist und bei dem die notwendige Wartung verringert ist.

Gelöst wird die Aufgabe durch ein Verfahren nach dem Anspruch 1. Weitere vorteilhafte Ausführungsformen sind in den abhängigen Ansprüchen angegeben.

Die eingangsgenannte Aufgabe wird somit gelöst mit einem Verfahren zum Absaugen und Zerkleinern wenigstens eines Streifens, der durch zumindest einen Längsschnitt von einer Folienbahn erzeugt wird,
- bei welchem mit wenigstens einer Förderleitung der Streifen von der Folienbahn abgeführt wird,
- bei welchem mit einem Zerkleinerer der Streifen zerkleinert wird, und
- bei welchem mit einer Einrichtung zum Bereitstellen eines Volumenstroms der Streifen von der Folienbahn zum Zerkleinerer gefördert wird, und
- bei welchem die Einrichtung zum Bereitstellen eines Volumenstroms eine erste Saugeinrichtung umfasst, mit welcher in Transportrichtung des Streifens gesehen vor dem Zerkleinerer ein Teil des Volumenstroms erzeugt wird,
- wobei mit einer zweiten Saugeinrichtung, welche in Transportrichtung des Streifens hinter dem Zerkleinerer angeordnet ist, das Einführen des Streifens in den Zerkleinerer unterstützt wird,

und welches dadurch gekennzeichnet ist,
dass mit der ersten Saugeinrichtung ein Teilvolumenstrom bereitgestellt wird, der einen Anteil am Volumenstrom von mehr als 50 %, vorzugsweise mehr als 60 % und insbesondere 70 % aufweist und die zweite Saugeinrichtung einen Volumenstromanteil von höchstens 50 % vorzugsweise höchstens 40 % und insbesondere von höchstens 30 % bereitstellt.

Die Aufgabe wird ebenfalls durch ein System gemäß dem Anspruch 2 gelöst.

Gemäß der Erfindung ist vorgesehen, dass die Einrichtung zum Bereitstellen eines Volumenstroms eine erste Saugeinrichtung umfasst, welche, in Transportrichtung des Streifens gesehen, vor dem Zerkleinerer mit der Förderleitung verbunden ist. Damit kann also ein hoher Volumenstrom zum Absaugen des Streifens zur Verfügung gestellt werden, ohne dass dieser, wie es aus dem Stand der Technik bekannt ist, durch den Zerkleinerer hindurch wirken muss. Dadurch kann im Vergleich zum Stand der Technik der Volumenstrom bei gleicher Wirkung verringert werden oder bei gleichem Volumenstrom eine höhere Saugleistung an der Folienbahn bzw. an der Trenneinrichtung zur Verfügung gestellt werden, was für ein zuverlässigeres Absaugen des Streifens sorgt. Besonders hervorzuheben ist allerdings, dass sich der hohe Volumenstrom von dem noch nicht zerkleinerten Streifen besonders einfach trennen lässt. Dazu kann vorgesehen sein, den Streifen im Vergleich mit dem Volumenstrom entlang eines anderen Wegs zu führen. Ist der Streifen von dem Volumenstrom getrennt, kann der Streifen beispielsweise einfach aufgrund der Schwerkraft in den Zerkleinerer fallen. Im Rahmen dieser Offenbarung ist unter Zerkleinerer eine Vorrichtung zu verstehen, die einen Streifen in kleinere Einheiten unterteilt, wie etwa Streifenstücke, Flocken, Körner, Pulver oder dergleichen. Ein Zerkleinerer kann daher als Schneidwerk, als Mahlwerk, als Hackwerk oder ähnliches ausgebildet sein. Weitere Alternativen sind denkbar.

Erfindungsgemäß ist es jedoch vorgesehen, eine zweite Saugeinrichtung vorzusehen, welche in Transportrichtung des Streifens hinter dem Zerkleinerer angeordnet ist. Diese zweite Saugeinrichtung kann also das Einführen des Streifens in den Zerkleinerer unterstützen, so dass auch leichte Materialien zuverlässig dem Zerkleinerer zugeführt werden können, die nicht oder nur schlecht aufgrund der Schwerkraft in den Zerkleinerer fallen. Die zweite Saugeinrichtung dient aber auch vorteilhafterweise dazu, die Flocken aus dem Zerkleinerer abzusaugen und weiter zu transportieren. Dazu weist die Saugeinrichtung wie auch alle in dieser Anmeldung erwähnten Saugeinrichtungen eine Saugseite und eine Überdruckseite auf. Die Saugseite dient somit dem Ansaugen von Luft bzw. von mit Flocken beladener Luft und die Überdruckseite dementsprechend dem Abgeben von Luft und/oder Flocken.

Vorgesehen ist es zudem, dass die erste Saugeinrichtung einen Teilvolumenstrom bereitstellt, wobei der Anteil am Volumenstrom mehr als 50 %, vorzugsweise mehr als 60 % und insbesondere mehr als 70 % beträgt. Mit diesen Volumenstromanteilen ist die erste Saugeinrichtung in der Lage, einen Streifen zuverlässig abzusaugen, wobei insbesondere bei leichten Materialien ein geringerer Volumenstromanteil ausreichend ist. Dementsprechend kann bei Vorhandensein einer zweiten Saugeinrichtung diese einen Volumenstrom von höchstens 50 %, vorzugsweise höchstens 40 % und insbesondere höchstens 30 % bereitstellen. Dabei ist es jedoch nicht erforderlich, dass beide Saugeinrichtungen zusammen einen Volumenstrom von 100 % aufbringen. Dieser Sachverhalt wird weiter unten deutlich.

Weiterhin ist vorzugsweise ein Führungselement zumindest zum teilweisen Führen des Streifens innerhalb dieses Führungselements vorgesehen. Dieses Führungselement umfasst dabei einen geschlossenen Querschnitt. Der Querschnitt kann jedoch auch offen sein, wobei der Querschnitt vorzugsweise nahezu geschlossen ist. Mit anderen Worten umgibt der Querschnitt des Führungselements den Streifen vollständig oder nahezu vollständig. Das Führungselement erstreckt sich dabei in Transportrichtung des Streifens. Vorzugsweise ist der Querschnitt des Führungselements kreisrund, so dass der Streifen im Wesentlichen mittig des Führungselements förderbar ist. Der kreisrunde Querschnitt ist vorzugsweise über die gesamte Länge des Führungselements zu finden, wobei jedoch der Radius des Querschnitts über die Länge variieren und insbesondere in Transportrichtung stetig geringer werden kann. Bei einer geeigneten Wahl des Verlaufs des Querschnitts kann eine im Wesentlichen gleiche Strömungsgeschwindigkeit über die Länge des Führungselements erzielt werden.

Vorzugsweise kann dieses Führungselement innerhalb einer geschlossenen Kavität angeordnet sein. Mit anderen Worten ist diese Kavität ein Bestandteil der Förderleitung, so dass das Führungselement selbst keine gegenüber der Umgebung abgedichtete Förderleitung darstellen muss. Die erste Saugeinrichtung kann nun an der Kavität angeschlossen sein, um einen Volumenstrom aus der Kavität heraus bereitzustellen. Das Führungselement kann in dem Boden der Kavität münden, von dem aus sich die Förderleitung in Richtung des Zerkleinerers fortsetzt.

Vorteilhaft ist es allerdings, wenn ein Führungselement zumindest zum teilweisen Führen des Streifens vorgesehen ist, wobei das Führungselement wenigstens eine luftdurchlässige Wandung umfasst. Damit kann der Streifen durch das Führungselement auf einfache Weise geführt werden, während gleichzeitig ein hoher Volumenstrom abgeführt werden kann, ohne den Streifen mitzuziehen. Die luftdurchlässige Wandung kann dabei aus verschiedenen Materialien bestehen. So kann ein Vliesmaterial vorgesehen sein oder auch ein Stoff. Genauso denkbar sind poröse Materialien oder perforierte oder gelochte feste Materialien, wie etwa ein gelochtes Metallblech, welches einfach herzustellen ist. Auch ein Geflecht aus einem oder mehreren Materialien kann an dieser Stelle vorgesehen werden, wie etwa ein Drahtgeflecht. Auch mehrere der vorgenannten Ausgestaltungen können zusammen vorgesehen sein. Insbesondere in Kombination mit den im vorhergehenden Absatz beschriebenen Merkmalen ist das beschriebene Führungselement mit wenigstens einer luftdurchlässigen Wandung sehr vorteilhaft.

Wie bereits weiter oben beschrieben worden ist, kann der Streifen bereits aufgrund der eigenen Schwerkraft in den Zerkleinerer gelangen oder zusätzlich durch den Zerkleinerer hindurch angesaugt werden. Um jedoch das Führen des Streifens zu verbessern, weist das System eine dritte Saugeinrichtung auf, die eine Saugseite und eine Überdruckseite umfasst, wobei die Überdruckseite in Transportrichtung des Streifens gesehen vor dem Zerkleinerer in die Förderleitung mündet. Insbesondere mündet in dem Fall, in dem ein Führungselement und/oder eine Kavität vorgesehen sind, die Überdruckseite der dritten Saugeinrichtung in Transportrichtung des Streifens vorzugsweise zwischen dem Führungselement und/oder der Kavität und dem Zerkleinerer in die Förderleitung.

Weiterhin ist es vorteilhaft, wenn die Saugseite der dritten Saugeinrichtung in Transportrichtung des Streifens hinter dem Zerkleinerer mit der Förderleitung verbunden ist. Auf diese Weise kann der Volumenstrom, der durch den Zerkleinerer gelangt, erhöht werden, um den Streifen sicher zu führen. Jedoch zweigt eine Leitung, die mit der Saugseite der Saugeinrichtung verbunden ist, von der Förderleitung ab, so dass die zweite Saugeinrichtung nur mit einem geringen Volumenstrom zu arbeiten braucht. Mit dieser Anordnung wird also ein Kreislauf realisiert, in welchem die dritte Saugeinrichtung integriert ist. Durch eine geschickte Ausformung der Förderleitung kann es möglich gemacht werden, dass auch ohne einen Luftabscheider oder einen Filter ein Volumenstrom mit keinen oder nur wenigen Flocken zur dritten Saugeinrichtung gelangt. Selbst wenn Flocken in dem Volumenstrom vorhanden sind, werden diese wieder in den Zerkleinerer geführt, so dass auch in diesem Fall die Staubbelastung in der Umgebung reduziert ist. Im Zusammenhang mit dem Vorsehen einer dritten Saugeinrichtung wird deutlich, dass die erste und die zweite Saugeinrichtung zusammen weniger als 100 % des Volumenstroms hervorrufen.

Es ist besonders vorteilhaft, wenn die durch eine oder mehrere der Saugeinrichtungen erzeugbaren Volumenströme steuerbar sind. Damit können die Volumenströme an aktuelle Prozessparameter angepasst werden. Zu diesen Prozessparametern gehören beispielsweise die Größe, insbesondere die Breite, des Streifens, das spezifische Gewicht des Streifens, die Dichte des Materials des Streifens, die Transportgeschwindigkeit und einige Parameter mehr. Die Volumenströme können dabei bei der Erstinbetriebnahme des erfindungsgemäßen Systems und/oder bei der Einrichtung eines Produktionsauftrages gesteuert und die jeweiligen Volumenstromanteile der einzelnen Saugeinrichtungen während der Produktion beibehalten werden. Zur Steuerung kann eine computerbasierte Steuereinrichtung vorgesehen sein. Die Steuerung kann auch Bestandteil einer Regeleinrichtung sein, welche die aktuellen Volumenströme in Betracht ziehen kann, aber auch gegebenenfalls eine Staubbelastung in der Umgebung. Auch die Transportgeschwindigkeit des Streifens oder der Unterdruck im Bereich der Trenneinrichtung können hier Regelgrößen sein.

Vorteilhaft ist es, wenn die Volumenströme durch eine Steuerung der Antriebsleistungen der Saugeinrichtungen steuerbar sind. Bei Saugeinrichtungen, die durch einen Frequenzumrichter gespeist werden, kann beispielsweise die Antriebsfrequenz gesteuert werden. Auch mechanische Steuerelemente sind denkbar, wie etwa Drosselklappen, die den Querschnitt von Saug- oder Förderleitungen variabel verkleinern können, um die Volumenströme zu steuern. Solche mechanischen Steuerelemente können manuell oder motorisch, beispielsweise elektromotorisch, betrieben werden.

In weiterer Ausgestaltung der Erfindung ist ein Luftabscheider vorgesehen, der in Transportrichtung des Streifens bzw. der Flocken hinter der zweiten Saugeinrichtung angeordnet ist. Zusätzlich ist eine Unterdruckquelle vorgesehen, welche stromabwärts der Transportrichtung der Flocken hinter dem Luftabscheider angeordnet ist. Diese Konstellation kann einen eigenen erfinderischen Gedanken darstellen. Die Unterdruckquelle beaufschlagt den Luftabscheider mit einem Druck, der kleiner ist als der Druck des Volumenstroms, der durch die Überdruckseite der zweiten Saugeinrichtung aufgebracht wird. Der Vorteil ist dabei, dass in der Bilanz ein Unterdruck an dem Luftabscheider anliegt, so dass eine Staubentwicklung vermieden wird. Der durch die Unterdruckquelle zur Verfügung gestellte Unterdruck ist dabei so gewählt, dass die Flocken frei aus dem Luftabscheider aufgrund der Einwirkung der Schwerkraft nach unten fallen und nicht von dem herrschenden Unterdruck in Richtung der Unterdruckquelle abgeführt werden. Aus dem Luftabscheider können die Flocken dann direkt einer Wiederverwertung zugeführt werden, beispielsweise durch eine unmittelbare Einspeisung in einen Extruder, der auch Primärmaterial verarbeitet. Alternativ können die Flocken auch durch Abgabe in einen Auffangbehälter der Entsorgung zugeführt werden. Als Beispiel für einen erfindungsgemäßen Luftabscheider sei ein Fliehkraftabscheider, der oft auch als Zyklon bezeichnet wird, erwähnt.

Die in dieser Offenbarung genannten Saugeinrichtungen haben in der Regel die eine Saugseite und eine Überdruckseite und können beispielsweise als Gebläse beziehungsweise Ventilatoren ausgebildet sein. Im Bereich der Ventilatoren sind verschiedene Ausgestaltungsvarianten mit der vorliegenden Erfindung umfasst. Grundsätzlich sind auch Verdichter als Saugeinrichtungen denkbar.

Weitere Vorteile, Merkmale und Einzelheiten der Erfindung gehen aus der nachfolgenden Beschreibung hervor, in der unter Bezugnahme auf die Figuren verschiedene Ausführungsbeispiele im Einzelnen erläutert sind. Dabei können die in den Ansprüchen und in der Beschreibung erwähnten Merkmale jeweils einzeln für sich oder als beliebige Kombinationen erwähnter Merkmale erfindungswesentlich sein. Im Rahmen der gesamten Offenbarung gelten Merkmale und Einzelheiten, die im Zusammenhang mit dem erfindungsgemäßen Verfahren beschrieben sind, selbstverständlich auch im Zusammenhang mit dem erfindungsgemäßen System und jeweils umgekehrt, so dass bezüglich der Offenbarung zu den einzelnen Aspekten der Erfindung stets wechselseitig Bezug genommen wird beziehungsweise werden kann. Die einzelnen Figuren zeigen:
- Fig. 1: Schema einer Gießfolien-Extrusionsmaschine mit Streifenabsaugung
- Fig. 2: Schema eines erfindungsgemäßen Systems zum Absaugen und zum Zerkleinern wenigstens eines Streifens

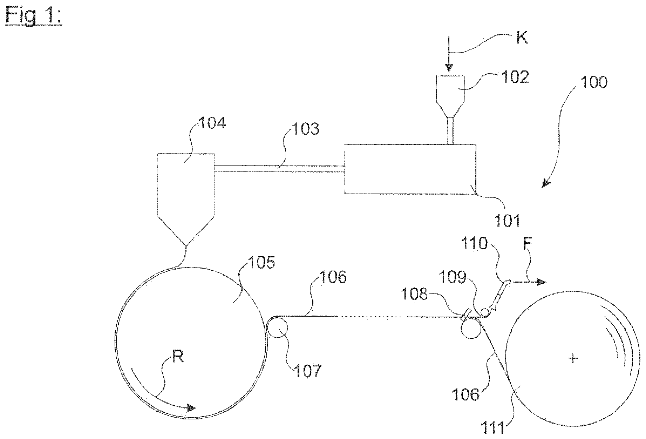

Die **Figur 1** zeigt eine schematische Seitenansicht einer Gießfolien-Extrusionseinrichtung 100, welche als Beispiel einer Folienbereitstellungseinrichtung dient. Aus dieser Folie, welche vorzugsweise eine Kunststofffolie ist, lässt sich zumindest ein Streifen erzeugen, was anhand der Figur 1 näher erläutert wird. Eine Folienbereitstellungseinrichtung kann auch eine beliebige andere Folienherstellungsanlage, etwa eine Blasfolienanlage, aber auch eine genannte Wiederaufwicklungseinrichtung sein, in der von einer Rolle eine Folie mit einer Breite abgezogen und in mehrere Folienbahnen mit kleinerer Breite aufgeteilt wird. Auch bei diesem Prozess können Streifen anfallen, die zu entsorgen sein. Wird das erfindungsgemäße System innerhalb einer Folienherstellungsanlage verwendet, so lässt sich der Streifen direkt wiederverwerten.

Die Gießfolien-Extrusionseinrichtung 100 umfasst zunächst zumindest einen Extruder 101, dem aus wenigstens einer Dosiereinrichtung 102 Rohmaterial, in der Regel aus Kunststoffgranulat, in Richtung des Pfeils K zugeführt wird. Dieses Rohmaterial wird innerhalb des Extruders 101 zu einer Schmelze aufgeschmolzen und über eine Leitung 103 strangförmig an das Verteilwerkzeug 104 abgegeben wird. Dieses Verteilwerkzeug 104 verteilt die Schmelze in axialer Richtung der Walze und gibt die Schmelze anschließend auf die temperierte Walze 105, die in Richtung des Pfeils R rotiert und auf deren Oberfläche die Schmelze wieder erkaltet und somit eine Folie 106 bildet. Mit einer Umlenkwalze 107 kann nun die Folie 106 von der Walze 105 abgezogen und weiteren Stationen zugeführt werden. Das Durchlaufen weiterer Stationen wird durch den unterbrochenen Teil der Linie 106 dargestellt. Im weiteren Verlauf des Transports der Folie 106 kann nun eine Trenneinrichtung, die im vorliegenden Beispiel als Schlitzmesser 108 ausgebildet ist, wenigstens einen Streifen 109 von der Folienbahn 106 abtrennen. Ein solcher Streifen 109 kann beispielsweise ein Randstreifen sein, der in einer Gießfolien-Extrusionseinrichtung in der Regel nicht den geforderten Qualitätsmerkmalen der Folienbahn genügt und daher abzuführen ist. Der Streifen 109 kann nun mittels der Förderleitung 110 aus der Folienbereitstellungseinrichtung beziehungsweise aus der Gießfolien-Extrusionseinrichtung 100 entfernt werden. Dies wird durch den Pfeil F dargestellt. Die Folienbahn 106 selbst wird in der Regel auf einen Wickel 111 aufgewickelt.

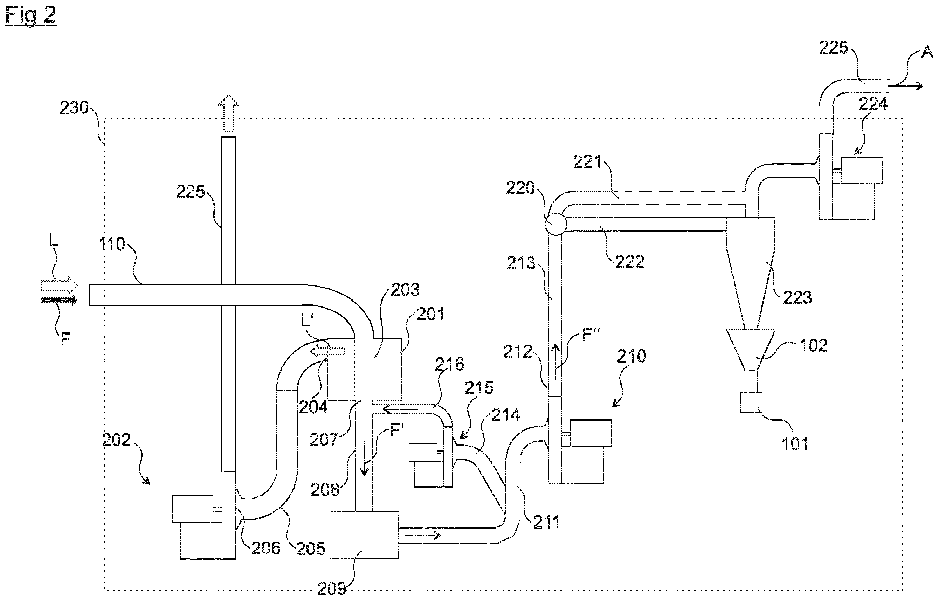

Die **Figur 2** stellt das erfindungsgemäße System zum Absaugen und zum Zerkleinern wenigstens eines Streifens 109 dar. Der Streifen oder die Streifen werden durch die Fortsetzung der Förderleitung 110 in Transportrichtung F zunächst einem als Behälter 201 ausgebildeten Kavität zugeführt. Dieser Behälter kann zylinderförmig, quaderförmig oder in einer beliebigen anderen Form ausgebildet sein. Um eine Transportkraft auf den Streifen aufbringen zu können, ist eine als Ventilator 202, beispielsweise als Radialventilator, dargestellte Saugeinrichtung vorgesehen, welche einen Volumenstrom hervorruft, der in Richtung des Pfeils L in die Förderleitung 110 einströmt. Der Volumenstrom gelangt in den Behälter 201 und transportiert auf diese Weise auch den Streifen 109 in den Behälter. Der Streifen 109 wird nun, vorzugsweise auf einer im Wesentlichen geradlinigen Bahn, durch den Behälter 201 geführt, Um das zu erreichen, ist innerhalb des Behälters 201 ein Führungselement 203 angeordnet, durch welches der Streifen 109 führbar ist bzw. geführt wird. Das Führungselement 203 kann ebenfalls zylinderförmig ausgebildet sein. Auch eine kegelstumpfförmige Ausgestaltung kann vorteilhaft sein, wobei der Kegelstumpf in Transportrichtung des Streifens 109 zuläuft. Auch eine beliebige Durchmesservariation über die Höhe des Führungselements 203 ist denkbar. Unabhängig von der geometrischen Ausbildung des Führungselements 203 kann vorgesehen sein, dass sein Querschnitt kreisförmig, ellipsenförmig, quadratisch oder sogar rechteckig ist. Wichtig ist jedoch, dass die Wandung oder die Wandungen des Führungselements zumindest bereichsweise luftdurchlässig sind. Dazu kann die Wandung beispielsweise spanend eingebrachte Öffnungen wie etwa Bohrungen umfassen oder aus luftdurchlässigem Material bestehen. Ein Drahtgewebe ist beispielsweise anwendbar, oder auch ein poröses Material. Aufgrund der Luftdurchlässigkeit ist es möglich, dass innerhalb des Behälters sich die Transportrichtung des Volumenstroms bzw. eines Teils hiervon von der Transportrichtung des Streifens trennt. Der Behälter 201 ist dazu mit einer Öffnung 204 versehen, an welche sich eine Saugleitung 205 anschließt, welche zur Saugseite 206 des Ventilators 202 führt. Das führt dazu, dass der Streifen 109 in die Transportrichtung F' geführt wird, während der Volumenstrom in die Richtung L' gelangt. Um zu vermeiden, dass sich Staub aus dem Zerkleinerer, der weiter unten beschrieben wird, in den Volumenstrom, der in Richtung L' transportiert wird, gelangt, ist die Öffnung 204 vorzugsweise an dem Ende des Behälters angeordnet, in dem die Förderleitung 110 mündet (oberes Ende). Die Öffnung 204 kann auch in der Wandung angeordnet sein, in die die Förderleitung 110 mündet.

Das Führungselement 203 mündet in einer Ausgangsöffnung 207 des Behälters 201. An die Ausgangsöffnung ist eine weitere Förderleitung 208 angeschlossen, welche in dem Zerkleinerer 209 mündet, wobei diese Förderleitung sich vorzugsweise geradlinig erstreckt. Somit wird der Streifen 109 vom Behälter 201 aus auf insbesondere direktem Weg dem Zerkleinerer 209 zugeführt, in welchem der Streifen in kleinere, nicht miteinander verbundene Stücke, beispielsweise Flocken, zerteilt wird.

Zum zuverlässigen Transport des Streifens 109 in den Zerkleinerer 209 ist ein als zweiter Ventilator 210 ausgestaltete zweite Saugeinrichtung vorgesehen, die stromabwärts des Zerkleinerers 209 angeordnet ist und über seine Saugleitung 211 mit dem Ausgang des Zerkleinerers verbunden ist. Die Saugleistung dieses Ventilators 210, welche einen entsprechenden Volumenstrom hervorruft, kann beispielsweise 50 % geringer sein als die Saugleistung des ersten Ventilators 202. Eine geringere Saugleistung des zweiten Ventilators 210 ist vorteilhaft, damit die mit den Flocken beladene Luft nicht mit zu hohem Druck und/oder Volumenstrom der Überdruckseite 212 des zweiten Ventilators 210 zugeführt wird. Die mit Flocken beladene Luft wird in Richtung des Pfeils F" durch das Rohr 213 abgeführt und der Wiederverwertung oder der Abfallsammlung zugeführt, was weiter unten noch genauer beschrieben werden wird.

Es kann notwendig sein, den Streifen 109 zwecks Zuführung zum Zerkleinerer 209 mit einem erhöhten Volumenstrom zu beaufschlagen. Um jedoch dazu den Volumenstrom bzw. die Saugleistung auf der Überdruckseite des zweiten Ventilators nicht erhöhen zu müssen, ist optional eine als dritter Ventilator 215 ausgestaltete dritte Saugeinrichtung vorgesehen. Die Zuführleitung 214, die zur Saugseite des Ventilators 215 führt, zweigt von der Saugleitung 211 ab. Die Überdruckseite des Ventilators 215 ist durch eine weitere Leitung 216 mit der Förderleitung 208 verbunden. Auf diese Weise wird der Volumenstrom zum Fördern des Streifens 109 vergrößert.

Die mit Flocken beladene Luft, die durch das Rohr 213 in Richtung F" geführt wird, gelangt über eine Weiche 220 entweder in das Rohr 221 oder in das Rohr 222. Das Rohr 222 mündet in einem Zyklon 223, in welchem die Luft und die Flocken größtenteils voneinander getrennt werden. Damit auch hier möglichst wenig Staub erzeugt wird, ist ein als vierter Ventilator 224 ausgebildete Saugeinheit vorgesehen, welche mit ihrer Saugseite ebenfalls am Zyklon angeschlossen ist. Der mit dem Ventilator 224 erzeugte Unterdruck ist größer als der mit dem Ventilator 210 erzeugte Überdruck oder der Druck, der ausgehend vom Ventilator 201 am Zyklon herrscht, so dass insgesamt am Zyklon 223 ein Unterdruck anliegt. Optional kann in dem Zyklon ein nicht gezeigter Drucksensor vorgesehen sein, mit welchem der Luftdruck innerhalb des Zyklons messbar ist. Der Ventilator 224 kann nun auf Basis des gemessenen Luftdrucks hinsichtlich seiner Saugleistung gesteuert werden, so dass sich der Luftdruck innerhalb des Zyklons innerhalb gesetzter Grenzen bewegt.

Aus dem Zyklon 223 können nun die abgeschiedenen Flocken der Dosiereinrichtung 102 und dem Extruder 101 zugeführt werden, so dass eine Wiederverwertung der Flocken erfolgen kann.

Die aus dem Zyklon 223 mittels des Ventilators 224 gereinigte Luft, die jedoch noch mit Staub belastet sein kann. oder auch das über das Rohr 221 geförderte Luft-Flocken-Gemisch kann nun über die Leitung 225 in Richtung des Pfeils A einem Abfallsammelbehälter, welcher nicht gezeigt ist, zugeführt werden.

Die vorliegende Erfindung zeichnet sich dadurch aus, dass der gesamte Weg des Streifens 109 bzw. der mit Flocken beladenen Luft durch die Vorrichtung ohne wartungsintensive Filter auskommt und auch keine mit Staub belastete Luft abgibt. Man kann daher einen Bilanzraum 230 definieren, der, bis auf die Leitung 225, alle im Zusammenhang mit der Figur 2 beschriebenen Merkmale umfasst. Dieser Bilanzraum ist frei von Filtern und frei von Merkmalen, die staubbelastete Luft abgeben, also als staubfrei bezeichnet werden kann. Dabei kann sogar die Überdruckleitung 225, die an der Überdruckseite des Ventilators 202 angeschlossen ist, innerhalb des Bilanzraumes enden. Unter "staubfrei" ist jedoch zu verstehen, dass aufgrund von Undichtigkeiten durchaus etwas Staub austreten kann, jedoch ist diese Staubmenge sehr gering, d. h., sie liegt unter 10 mg/m³ Luft.

| **Bezugszeichenliste** | |
|---|---|
| 100 | Gießfolien-Extrusionseinrichtung |
| 101 | Extruder |
| 102 | Dosiereinrichtung |
| 103 | Leitung |
| 104 | Verteilwerkzeug |
| 105 | Walze |
| 106 | Folie |
| 107 | Umlenkwalze |
| 108 | Schlitzmesser |
| 109 | Streifen |
| 110 | Förderleitung |
| 111 | Wickel |
| | |
| 201 | Behälter |
| 202 | Ventilator |
| 203 | Führungselement |
| 204 | Öffnung |
| 205 | Saugleitung |
| 206 | Saugseite |
| 207 | Ausgangsöffnung |
| 208 | Förderleitung |
| 209 | Zerkleinerer |
| 210 | Ventilator |
| 211 | Saugleitung |
| 212 | Überdruckseite |
| 213 | Rohr |
| 214 | Zuführleitung |
| 215 | Ventilator |
| 216 | Leitung |
| | |
| 220 | Weiche |
| 221 | Rohr |
| 222 | Rohr |
| 223 | Zyklon |
| 224 | Ventilator |
| 225 | Leitung |
| 230 | Bilanzraum |
| | |
| K | Pfeil zur Darstellung der Zuführrichtung |
| R | Pfeil zur Darstellung der Rotationsrichtung der Walze |
| F, F', F" | Pfeil zur Darstellung der Entfernung des Streifens 109 |
| L, L' | Pfeil zur Darstellung des Einströmens des Volumenstroms |
| A | Pfeil zur Darstellung der Zuführrichtung zum Abfallsammelbehälter |

## Patentansprüche

1. Verfahren zum Absaugen und zum Zerkleinern wenigstens eines Streifens (109), welcher durch zumindest einen Längsschnitt von einer Folienbahn (106) erzeugt wird,
bei welchem mit wenigstens einer Förderleitung (110) der Streifen (109) von der Folienbahn (106) abgeführt wird,
bei welchem mit einem Zerkleinerer (209) der Streifen (109) zerkleinert wird, bei welchem mit einer Einrichtung zum Bereitstellen eines Volumenstroms (202, 210) der Streifen (109) von der Folienbahn (106) zum Zerkleinerer (209) gefördert wird, und
bei welchem die Einrichtung zum Bereitstellen eines Volumenstroms eine erste Saugeinrichtung (202) umfasst, mit welcher in Transportrichtung (F) des Streifens (109) gesehen vor dem Zerkleinerer (209) ein Teil des Volumenstroms erzeugt wird,
wobei mit einer zweiten Saugeinrichtung (210), welche in Transportrichtung (F) des Streifens (109) hinter dem Zerkleinerer (209) angeordnet ist, das Einführen des Streifens (109) in den Zerkleinerer (209) unterstützt wird,
**dadurch gekennzeichnet,**
**dass** mit der ersten Saugeinrichtung (202) ein Teilvolumenstrom bereitgestellt wird, der einen Anteil am Volumenstrom von mehr als 50 %, vorzugsweise mehr als 60 % und insbesondere 70 % aufweist und
**dass** die zweite Saugeinrichtung (215) einen Volumenstromanteil von höchstens 50% vorzugsweise höchstens 40% und insbesondere von höchstens 30% bereitstellt.

2. System (230) mit wenigstens einer Förderleitung (110), durch welche ein Streifen (109) von einer Folienbahn (106) abführbar ist, mit einem Zerkleinerer (209) zum Zerkleinern des Streifens (106) und mit einer Einrichtung zum Bereitstellen eines Volumenstroms (202, 210) zum Fördern des Streifens (109) von der Folienbahn (106) zum Zerkleinerer (209),
wobei die Einrichtung zum Bereitstellen eines Volumenstroms (202, 210) eine erste Saugeinrichtung (202) umfasst, welche in Transportrichtung (F) des Streifens (109) vor dem Zerkleinerer (209) mit der Förderleitung (110, 208) verbunden ist, wobei eine zweite Saugeinrichtung (210) vorgesehen ist, welche in Transportrichtung (F) des Streifens (109) hinter dem Zerkleinerer (209) angeordnet ist,
**dadurch gekennzeichnet,**
**dass** die erste Saugeinrichtung (202) einen Teilvolumenstrom bereitstellt, der einen Anteil am Volumenstrom von mehr als 50 %, vorzugsweise mehr als 60 % und insbesondere 70 % aufweist,
**dass** mit der zweiten Saugeinrichtung (210) ein Volumenstromanteil von höchstens 50 % vorzugsweise höchstens 40 % und insbesondere von höchstens 30 % bereitstellbar ist, und
**dass** eine dritte Saugeinrichtung (215) vorgesehen ist, die eine Saugseite (214) und eine Überdruckseite (216) umfasst, wobei die Überdruckseite (216) in Transportrichtung (F) des Streifens (109) gesehen vor dem Zerkleinerer (209) in die Saugleitung (208) mündet.

3. System nach dem vorstehenden Anspruch,
**dadurch gekennzeichnet, dass**
ein Führungselement (203) mit einem geschlossenen Querschnitt zumindest zum teilweisen Führen des Streifens (109) innerhalb des Führungselements (203) vorgesehen ist.

4. System nach einem der Ansprüche 2 bis 3,
**dadurch gekennzeichnet, dass**
ein Führungselement (203) zum teilweisen Führen des Streifens (109) vorgesehen ist, welches wenigstens eine luftdurchlässige Wandung umfasst.

5. System nach dem Anspruch 2, **dadurch gekennzeichnet,**
die Saugseite (214) der dritten Saugeinrichtung (215) in Transportrichtung (F) des Streifens (109) hinter dem Zerkleinerer (209) mit der Förderleitung (211) verbunden ist.

6. System nach einem der Ansprüche 2 bis 5, **dadurch gekennzeichnet, dass**
die durch eine oder mehrere der Saugeinrichtungen (202, 210, 215) erzeugbaren Volumenströme steuerbar sind.

7. System nach einem der Ansprüche 2 bis 6, **dadurch gekennzeichnet, dass**
die Volumenströme durch eine Steuerung der Antriebsleistungen der Saugeinrichtungen (202, 210, 215) steuerbar sind.

## Claims

1. A method for suctioning and comminuting at least one strip (109), which is produced by at least one longitudinal cut of a film web (106),
in which the strip (109) is removed from the film web (106) with at least one conveyor line (110),
in which the strip (109) is comminuted with a comminutor (209),
in which the strip (109) is conveyed with a device for providing a volume flow (202, 210) from the film web (106) to the comminutor (209), and
in which the device for providing a volume flow comprises a first suction device (202), with which, viewed in the transport direction (F) of the strip (109), a part of the volume flow is produced upstream of the comminutor (209),
wherein with a second suction device (210), which is arranged in the transport direction (F) of the strip (109) downstream of the comminutor (209), the introduction of the strip (109) into the comminutor (209) is supported,
**characterized in**
**that** a partial volume flow is provided with the first suction device (202), which has a proportion of the volume flow of more than 50%, preferably more that 60% and in particular 70% and
**that** the second suction device (215) provides a volume flow proportion of at most 50% or at most 40% and in particular at most 30%.

2. A system (230) with at least one conveyor line (110), through which a strip (109) of a film web (106) can be removed, with a comminutor (209) for comminuting the strip (106) and with a device for providing a volume flow (202, 210) for conveying the strip (109) from the film web (106) to the comminutor (209),
wherein the device for providing a volume flow (202, 210) comprises a first suction device (202), which is connected to the conveyor line (110, 208) in the transport direction (F) of the strip (109) upstream of the comminutor (209), wherein a second suction device (210) is provided, which is arranged in the transport direction (F) of the strip (109) downstream of the comminutor (209),
**characterized in**
**that** the first suction device (202) provides a partial volume flow, which has a proportion of the volume flow of more than 50%, preferably more than 60% and in particular 70%, **that** with the second suction device (210) a volume flow proportion of at most 50%, preferably at most 40% and in particular of at most 30% can be provided, and
**that** a third suction device (215) is provided, which comprises a suction side (214) and an overpressure side (216), wherein the overpressure side (216), viewed in the transport direction (F) of the strip (109), opens into the suction line (208) upstream of the comminutor (209).

3. The system according to the preceding claim,
**characterized in that**
a guide element (203) having a closed cross section is provided at least for partially guiding the strip (109) within the guide element (203).

4. The system according to any one of claims 2 to 3,
**characterized in that**
the guide element (203) is provided for partially guiding the strip (109), which comprises at least one air-permeable wall.

5. The system according to claim 2,
**characterized in that**
the suction side (214) of the third suction device (215) is connected to the conveyor line (211) downstream of the comminutor (209) in the transport direction (F) of the strip (109)

6. The system according to any one of claims 2 to 5,
**characterized in that**
the volume flows that can be produced by one or more of the suction devices (202, 210, 215) can be controlled.

7. The system according to any one of claims 2 to 6,
**characterized in that**
the volume flows can be controlled by controlling the drive powers of the suction devices (202, 210, 215).

## Revendications

1. Procédé pour l'aspiration et le broyage d'au moins une bande (109), qui est générée par au moins une découpe longitudinale d'une bande de film (106),
dans lequel, avec au moins une conduite de convoyage (110), la bande (109) est évacuée de la bande de film (106),
dans lequel, avec un broyeur (209), la bande (109) est broyée,
dans lequel, avec un dispositif pour la mise à disposition d'un flux volumique (202, 210), la bande (109) est convoyée de la bande de film (106) vers le broyeur (209) et
dans lequel le dispositif de mise à disposition d'un flux volumique comprend un premier dispositif d'aspiration (202) avec lequel, vu dans le sens de transport (F) de la bande (109), une partie du flux volumique est générée avant le broyeur (209),
dans lequel, avec un deuxième dispositif d'aspiration (210), qui est disposé, vu dans le sens de transport (F) de la bande (109), derrière du broyeur (209), favorise l'introduction de la bande (109) dans le broyeur (209),
**caractérisé en ce que**
avec le premier dispositif d'aspiration (202), un flux volumique partiel est mis à disposition, qui constitue une part du flux volumique de plus de 50 %, de préférence de plus de 60 % et plus particulièrement de 70 % et
le deuxième dispositif d'aspiration (215) met à disposition une part du flux volumique de 50 % maximum, de préférence de 40 % maximum et plus particulièrement de 30 % maximum.

2. Système (230) avec au moins un une conduite de convoyage (110), grâce à laquelle une bande (109) d'une bande de film (106) peut être évacuée, avec un broyeur (209) pour le broyage de la bande (106) et avec un dispositif de mise à disposition d'un flux volumique (202, 210) pour le convoyage de la bande (109) de la bande de film (106) vers le broyeur (209),
dans lequel le dispositif de mise à disposition d'un flux volumique (202, 210) comprend un premier dispositif d'aspiration (202) qui est relié, vu dans le sens de transport (F) de la bande (109), avant le broyeur (209), avec la conduite de convoyage (110, 208), dans lequel un deuxième dispositif d'aspiration (210) est prévu, qui est disposé, vu dans le sens de transport (F) de la bande (109), derrière le broyeur (209),
**caractérisé en ce que**
le premier dispositif d'aspiration (202) met à disposition un flux volumique partiel qui constitue une part du flux volumique supérieure à 50 %, de préférence plus de 60 % et plus particulièrement de 70 %,
avec le deuxième dispositif d'aspiration (210), une part du flux volumique de 50 % maximum, de préférence de 40 % maximum et plus particulièrement de 30 % maximum peut être mise à disposition et
un troisième dispositif d'aspiration (215) est prévu, qui comprend un côté d'aspiration (214) et un côté de surpression (216), dans lequel le côté de surpression (216) débouche, vu dans le sens de transport (F) de la bande (109), avant le broyeur (209), dans la conduite d'aspiration (208).

3. Système selon la revendication précédente,
**caractérisé en ce que**
un élément de guidage (203) avec une section transversale fermée est prévu au moins pour le guidage partiel de la bande (109) à l'intérieur de l'élément de guidage (203).

4. Système selon l'une des revendications 2 à 3,
**caractérisé en ce que**
un élément de guidage (203) est prévu pour le guidage partiel de la bande (109), qui comprend au moins une paroi perméable à l'air.

5. Système selon la revendication 2,
**caractérisé en ce que**
le côté d'aspiration (214) du troisième dispositif d'aspiration (215) est relié, vu dans le sens de transport (F) de la bande (109), derrière le broyeur (209), avec la conduite de convoyage (211).

6. Système selon l'une des revendications 2 à 5,
**caractérisé en ce que**
les flux volumiques pouvant être générés par un ou plusieurs des dispositifs d'aspiration (202, 210, 215) peuvent être contrôlés.

7. Système selon l'une des revendications 2 à 6,
**caractérisé en ce que**
les flux volumiques peuvent être contrôlés grâce à un contrôle des puissances d'entraînement des dispositifs d'aspiration (202, 210, 215).
